# EUROPEAN PATENT SPECIFICATION

(11) **EP 1 351 759 B1**
(45) Date of publication and mention of the grant of the patent: **02.03.2005**
(21) Application number: 02710552.7
(22) Date of filing: 18.01.2002
(51) Int. Cl.: B01F 17/00, C08L 63/00

(54) **DISPERSING AGENT**
DISPERGIERMITTEL
AGENT DE DISPERSION

(30) Priority: 19.01.2001 EP 01200210
(43) Date of publication of application: 15.10.2003
(73) Proprietor: Efka Additives B.V., 8466 SN Nijehaske (NL)
(72) Inventor: LOEN, Elizabeth, Maaike, NL-8937 BA Leeuwarden (NL); PIRRUNG, Frank Olivier Heinrich, 8 465 SM Oudehaske, The Netherlands (NL)
(74) Representative: Humburg, Angelika
(86) International application number: PCT/NL2002/000041
(87) International publication number: WO 2002/057004

(56) References cited:
- EP-A- 0 449 374
- EP-A- 0 882 772
- US-A- 4 556 683
- US-A- 4 938 885
- US-A- 5 418 301
- US-A- 5 596 027
- US-A- 5 663 247

## Description

The present invention relates to a dispersing agent or salt thereof, based on a compound containing at least one pigment affinic group.

The invention further relates to the use of said dispersing agents for dispersing solid substances (fillers, pigments and the like), to be included in liquid systems.

To introduce solid substances, such as pigments, into liquid media, high mechanical forces are necessary. This depends to a large extent on the solid substance's wettability by the surrounding medium, as well as on the affinity for this medium. In order to reduce these dispersing forces, it is conventional to use dispersing agents which facilitate incorporating the substances. This mostly concerns surface-active agents or surfactants, of anionic or cationic or non-ionic structure. In relatively low amounts of addition, these agents are either applied directly to the solid substance or added to the dispersing medium. Through such a surfactant, the energy required for the dispersion is considerably reduced.

Further, it is known that such solid substances, after dispersion, tend to reagglomerate, which nullifies the initially induced dispersing energy and leads to serious problems. This phenomenon can be explained by *inter alia* London/van der Waals' forces, by which the solid substances are mutually attracted. In order to nullify these attractive forces, adsorption layers should be provided on the solid substances. This occurs through the use of such surfactants or polymers.

During and after the dispersion, however, there arises an interaction of the surrounding medium with the solid particle, so that a desorption of the surfactant can arise in exchange for the surrounding medium present in a higher concentration. However, in most cases this surrounding medium is incapable of building up such stable adsorption layers, so that the entire system flocculates. This is evidenced by *inter alia* an increase of the viscosity in liquid systems, loss of gloss, color shifts in paints and coatings, insufficient development of coloring power in pigmented plastics and lacquers, as well as a decrease of the mechanical strength in reinforced plastics.

In European patent applications 154.678, 438.836 and 520.586 dispersants are described, based on the reaction product of a polyisocyanate with a functionality of 2.5 to 6 with a compound containing a ring structure with at least one basic nitrogen atom in the ring.

These known dispersants are typically based on cyclic compounds that are attached to the polyisocyanate via an amino- or hydroxy-functional side chain. Compounds representative thereof are
1-(2-aminoethyl)piperazine, 2-amino-6-methoxybenzothiazole,
4-(2-aminoethyl)pyridine, 4-(aminomethyl)pyridine,
3-amino-1,2,4-triazole, 1-(3-aminopropyl)imidazole,
4-(2-hydroxyethyl)pyridine and 1-(2-hydroxyethyl)imidazole.

These known products are useful for a large number of applications. However, a disadvantage, among others, is that the products provide only a limited viscosity reduction of highly filled pigmented dispersions and the build-up of pseudoplastic and thixotropic flow behaviour.

The previously mentioned polymers have molecular weights in the range of 8000 tot 20000 and a distinctive linear structure. Such linear polymers with pending polar/apolar functional groups are also able to interact with themselves by polar force and prevent Newtonian flow. More in particular the known dispersant provide insufficient reduction in viscosity, especially for state of the art automotive paints.

In WO-A 9726984 a dispersing agent is described, based on a different kind of active cyclic compound.

EP-A-0882772 discloses the use of dendrimers as dispersing agents for pigment containing compositions.

It is an object to provide a new range of dispersants, which have advantageous properties, such as flow behaviour that can approach Newtonian flow, having a low yield value, while maintaining good compatibility and steric hindrance build-up to prevent flocculation.

The invention is based on the use of dendrimers (as defined herein) as core material for the dispersing agent. This results in a very specific three dimensional structure with advantageous dispersing properties.

The invention is accordingly directed to a dispersing agent or salt thereof, as defined in claim 1.

Basically the invention is concerned with a dendrimer having a plurality of functional groups, to a number of which functional groups a linking moiety is attached, the linking group connecting a functional moiety to the dendrimer.

The functional groups of the dendrimer are namely selected from those groups that are able to connect to a linking chain, hydroxyl, -NCO, carboxyl or amine groups. To these groups it is possible to connect a polyester, polyether or other chain. The linking chain has to have the ability to connect to the functional moiety. The linking chain is based on dicarboxylic acids, diol, diamines, hydroxycarboxylics acids, hydroxyamines, amino-carboxylic acids.

Within the scope of the invention, the term dendrimers refers to three-dimensional, highly branched oligomeric or polymeric molecules. The dendrimers used in accordance to the invention comprise a core, a number of branching generations and an external surface composed of functional, reactive groups. A branching generation is composed of structural units that are bound radially to the core or to the structural units of a previous generation and which extend outwards. The structural units have at least two monofunctional groups and/or at least one monofunctional group and one multifunctional group. The term multifunctional is understood as having a functionality of 2 or higher. To each functionality, a new structural unit may be linked, a higher branching generation being produced as a result. The structural units may either be the same (they are repeated, therefore) for each successive generation, or they may be different. Dendrimers can be characterized, inter alia, on the basis of a degree of branching. The term degree of branching of a dendrimer of a particular generation is understood, here and hereinafter, as the ratio between the number of branchings present and the maximum possible number of branchings in a completely branched dendrimer of the same generation. The term functional end groups of a dendrimer refers to those reactive groups which form part of the external surface. The branchings may occur with greater or lesser regularity. Whilst it is possible, in the dendrimers which can be used within the scope of the invention, for the branchings at the external surface of the dendrimer all to be of the same generation, it is also possible for the branchings at the surface to be of different generations. The latter may be the case, for example, if the synthesis of the dendrimers proceeds in a less controlled manner.

The term dendrimers is also understood, according to the invention, as dendrimers having defects in the branching structure, dendrimers having an incomplete degree of branching, asymmetrically branched dendrimers, star polymers, highly branched polymers, highly branched copolymers and/or block copolymers of highly branched and not highly branched polymers.

In principle, all dendrimers having functional end groups can be considered for use according to the invention. The best results are often achieved either with perfectly branched dendrimers or with highly branched polymers or highly branched copolymers. The term perfectly branched dendrimers refers to those dendrimers in which, in each generation, at least 95%, preferably 99% of the functionality of the functional groups in the structural units has reacted with a functional group of a structural unit of the next generation.

The number of functional end groups of a dendrimer which is provided with a modifying group according to the invention generally varies according to the type and generation of the dendrimer used and the type and dimensions of the modifying group. Preferably, dendrimers are used in which at least 30% of the functional end groups of the dendrimer are provided with a modifying group, more preferably at least 50%, even more preferably at least 70% and most preferably at least 90%. The absolute number of functional groups per dendrimer is at least 8, but preferably it is higher, such as at least 12.

Dendrimers suitable within the scope of the invention are dendrimers based on, for example, a polyester, polyether, polythioether, polyamide, polyetherketone, polyalkylene imine, polyamido amine, polyether amide, polyarylene, polyalkylene, aromatic polyalkylene, polyaryl acetylene and/or a phosphorus-or silicon-containing dendrimer, or a combination thereof. Preferably, use is made of a dendrimer based on a highly branched polyester; for example a polyester prepared from 2,2-di(hydroxymethyl)propan-1-oic acid. It is also possible to employ polyalkylene imine or polyamido amine based dendrimers.

If those dendrimers according to the invention are used in which branching generations can be designated, use is preferably made of dendrimers of the 2nd or 3rd generation. It is also possible to use dendrimers of a higher generation.

In one embodiment the dentritic polymers sold under the trademark of Boltom can be used. These dendrimers have been developed by Perstorp (SE 468 771; SE 503 342) and are of polyester type consisting of a multi-functional core, from which branches extend to give a highly branched inherent structure with a large number of terminal hydroxyl groups. The core consists of a polyalcohol, such as trimethylolpropane, pentaerythritol or derivatives thereof. The type of polyol core used governs the number of branches that will extend from it. The hyperbranched structure is built from 2,2-Dimethylol propionic acid (Bis-MPA), which has the unique functionality of one COOH-group and two OH-groups. The shell consists of a large number of OH-groups, where the functionality depends on the type of core used and the number of generations.

As indicated above, to at least some of the functional groups of the dendrimer a linking group (chain extender) is attached. At the end of the chain extender a pigment affinic group is present, which interacts with the materials to be dispersed, more in particular with the solid pigments. To the remainder of the functional groups a compatibility-enhancing group will preferably be attached.

The pigment affinic groups or interacting groups generally comprise a polar group, that has been selected from nitrogen containing moieties, carboxyl moieties, phosporic ester moieties and sulphonic ester moieties.

It is important to note that the pigment affinic group is different from the functional group, not only in function but also in chemical nature. The functional group acts to provide a coupling between the core and the outer shell of groups (pigment affinic groups) that provide the adherence to the pigment.

According to a preferred embodiment a nitrogen containing moiety is used as the pigment affinic group, more in particular a heterocyclic nitrogen moiety. This will be at least a basic (alkaline) nitrogen atom, preferably present in a ring structure (aliphatic or aromatic). Suitable structures have been described in the European patent application Nos. 154.678, 438.836 and 520.586, or in WO-A 9726984.

For this preferred pigment affinic group, the starting point is generally the various aromatic, heterocyclic compounds with one or more nitrogen atoms in the ring, at least one of the nitrogen atoms having a proton. Examples thereof are piperazine, imidazoline, benzimidazole, imidazole, pyrrolidone, pyrazole, 1,2,4-triazole, benzotriazole, indole, indazole, 1-H-tetrazole, as well as substituted derivatives thereof. Most preferred are pyrrolidone, 1,2,4-triazole, pyrazole, imidazole and derivatives thereof.

Other preferred embodiments include those that are based on acidic moieties like carboxyl moieties, phosporic ester moieties and sulphonic ester moieties. These embodiments are preferred in case of the use of inorganic pigments and fillers and can be obtained through reaction with cyclic anhydrides, (poly)phosphoric acids, P₂O₅, SO₂, and the like.

In addition to the pigment affinic groups, compatibility enhancing groups are present. These groups are attached to the functional groups of the dendrimer, and function to improve the compatibility of the dispersant with the surrounding medium and/or adsorption on solid surfaces. The compatibility enhancing groups can also have a function to influence the solubility of the dispersant in the surrounding medium, i.e. to provide water solubility, water dispersabilty or solvent solubility.

These compatibility enhancing groups are selected from fatty materials and derivatives thereof, aromatic materials, optionally substituted alkyl moieties, ester group containing moieties, amide group containing moieties, and ether group containing moieties. Specific examples are polyethers (EO, PO and/or butylenes oxide based), polyesters (polycaprolacton), fatty acids (stearic acid, 12-hydroxy-stearic acid, ricinoic acid), aliphatic chains and aromatic terminated chains. More in particular it is possible to provide aromatic groups on the dendrimer by reacting the functional group thereof with aromatic acids, aromatic alcohols or aromatic amines such as benzoic acid and phtalic acids, naphtol, phenol, aniline, and the like.

In addition to the compatibility enhancing function, of these groups they may also have a function to extend the spherical structure of the dispersant.

The above-mentioned reaction product according to the invention may be used as a dispersing agent in liquid formulations such as paints (especially for the automotive industry). Suitable liquid formulations are urethane lacquers, two-component paints, alkyd systems, epoxy coatings, stoving enamels, nitro cellulose paints, acrylics, unsaturated polyester systems, coil coatings, and the like, having dispersed therein solid substances (pigments, fillers).

It is possible to combine the dispersant of the present invention with other dispersing agents and other suitable additives for these formulations.

Through the functional groups, the addition compounds are often capable of forming salts. According to the invention, they can also be used as dispersant in the form of such salts.

These salts are obtained from the dispersant through neutralization with organic or inorganic acids, or bases, or through quaternization. Salts with organic monocarboxylic acids and sulfonic acids are preferred.

The invention will now be explained in and by an example, but is not limited thereto.

### Example

A dispersing agent was prepared using the 3-imidazol-1-yl-propionic acid-2-hydroxyethylester described in WO-A-9726984 as the pigment affinic group.

In order to prepare the said ester, at room temperature 40 g of 5-isocyanate-1-(isocyanatomethyl)-1,3,3-trimethylcyclohexane (IPDI) and 25.3 g of methoxypropylacetate was weighed into a 500 ml flask.

Next, 44.19 g of 3-imidazol-1-yl-propionic acid-2-hydroxyethylester was added to the flask in 2 hours, under continuous stirring in a nitrogen environment. The exothermic reaction did not exceed the temperature of 60 °C.

After 1 hour the solid content of 70% was measured at 150°C, using a Mettler HR 73 Halogen Moisture Analyzer.

The final product (B) was a colourless and viscous fluid.

At room temperature 26.1 g of caprolacton was weighed into a 500 ml flask. The reaction was performed in a nitrogen environment and with continuous stirring. The temperature was raised to 120 °C and at this temperature 25.0 g of Boltorn H20 dentrimer (Perstorp) was carefully added so that the dentrimer dissolved almost immediately.

Then the temperature was further raised until 170 °C and at this temperature 100 mg of ditbutyltin dilaurate was added to the flask. After 1 hour, 24.0 g of talloil fatty acid (TOFA) was added. As a consequence of this reaction 1.55 g of water was released and was captured by using a dean-stark trap.

The temperature was decreased until 120°C when the acid number was less than 5 mg KOH/g. Then, 8.48 g of phthalic anhydride was added and after 1 hour the temperature was decreased until room temperature. The product was very viscous and had a brown colour.

At room temperature 25.0 g of the product thus obtained, together with 100 mg of ditbutyltin dilaurate and 27.05 g of methoxypropylacetate was weighed into a 500 ml flask. Under stirring the said product dissolved in the methoxypropylacetate.

The reaction was performed in a nitrogen environment and with continuous stirring.

Carefully, 10.13 g of B was added to the flask in 2 hours, the exothermic reaction did not exceed the temperature of 60°C.

After 1 hour, 2.00 g of n-butanol was added and the solid content of 50% was measured at 150 °C. The product was a yellowish liquid with amine value 13.7 mg KOH/g.

In the table below the formulation for the application of the thus obtained product of the invention is given.

| *Ingredients* | *Amount (g)* |
|---|---|
| Setal 84-xx-70 | 10.0 |
| Product of the invention | 4.0 |
| Solvesso 100 | 28.0 |
| Pigment Irgazin red BTR | 8.0 |
| Pearls | 100 |
| Dispersed for 1,5 hour in a scandex to produce a pigment concentrate | |
| Pigment concentrate | 2.50 |
| Setal 84-xx-70 | 3.91 |
| Setamine 132 BB-71 | 1.67 |
| Solvesso 100 | 1.89 |
| E-3031 | 0.03 |
| Mixed for 30 seconds 3000 rpm with a dispermat | |

The lacquer obtained in this way was poured over a polyester sheet and dried for half an hour in the oven at 130 °C. The measured gloss was 89 at ∠20°. The viscosity of the pigment concentrate is given in the table below and was measured with a Brookfield DV-I viscosity meter with spindle #4.

| Code | Description | 50 rpm | Gloss ∠20° |
|---|---|---|---|
| E-4401 | *Acrylic dispersant* | 7920 | 90.7 |
| Invention | *Dendritic polymer* | 3000 | 89.1 |

## Claims

1. Dispersing agent or salt thereof, comprising at least one dendrimer, said dendrimer comprising a core, a number of branching generations and an external surface composed of functional reactive groups selected from the group of hydroxyl, -NCO, carboxyl and amine; wherein
a) between 5 and 75 % of the total number of functional reactive groups have been reacted with a group R-X, wherein
R is a chain extender linking chain having at least 2 atoms in the chain and is based on dicarboxylic acids, diol, diamines, hydroxycarboxylic acids, hydroxyamines, or amino-carboxylic acids, and where
X is a group which interacts with the solid pigment to be dispersed and which is selected from nitrogen containing moieties, carboxyl moieties, phosporic ester moieties and sulphonic ester moieties, with the proviso that the functional reactive group and the group X are different; and wherein
b) a part of the functional reactive groups have been reacted with compatibility enhancing groups selected from fatty materials and derivatives thereof, aromatic materials, optionally substituted alkyl moieties, ester group containing moieties, amide group containing moieties, and ether group containing moieties.

2. Dispersing agent according to claim 1, wherein R is linked to the dendrimer and to the X-groups through ester, ether, amide, urea or urethane groups.

3. Dispersing agent according to claims 1-2, wherein the number of functional groups that have reacted with a group R-X is between 25 and 75 % and more preferred between 50 and 75 %.

4. Use of the dispersing agent according to claims 1-3, for dispersing solid substances.

## Patentansprüche

1. Dispergiermittel oder Salz davon, umfassend mindestens ein Dendrimer, wobei das Dendrimer einen Kern, eine Vielzahl von verzweigenden Generationen und eine äußere Oberfläche, zusammengesetzt aus funktionellen reaktiven Gruppen, ausgewählt aus der Gruppe von Hydroxyl, -NCO, Carboxyl und Amin, umfasst; wobei
a) zwischen 5 und 75% der Gesamtanzahl von funktionellen reaktiven Gruppen mit einer Gruppe R-X reagiert haben, worin
R eine Kettenverlängerungs-Verbindungskette mit mindestens 2 Atomen in der Kette ist, und auf Dicarbonsäuren, Diol, Diaminen, Hydroxycarbonsäuren, Hydroxyaminen oder Aminocarbonsäuren basiert, und worin
X eine Gruppe darstellt, die mit dem festen, zu dispergierenden Pigment in Wechselwirkung tritt, und die ausgewählt ist aus Stickstoff enthaltenden Einheiten, Carboxyleinheiten, Phosphorsäureestereinheiten und Sulfonsäureestereinheiten, mit der Maßgabe, dass die funktionelle reaktive Gruppe und die Gruppe X verschieden sind; und worin
b) ein Teil der funktionellen reaktiven Gruppen mit die Verträglichkeit verbessernden Gruppen, ausgewählt aus Fettmaterialien und Derivaten davon, aromatischen Materialien, gegebenenfalls substituierten Alkyleinheiten, Estergruppen enthaltenden Einheiten, Amidgruppen enthaltenden Einheiten und Ethergruppen enthaltenden Einheiten, umgesetzt wurde.

2. Dispergiermittel nach Anspruch 1, worin R mit dem Dendrimer und den X-Gruppen durch Ester-, Ether-, Amid-, Harnstoff- oder Urethangruppen verbunden ist.

3. Dispergiermittel nach Ansprüchen 1-2, worin die Anzahl von funktionellen Gruppen, die mit einer Gruppe R-X reagiert hat, zwischen 25 und 75% und bevorzugter zwischen 50 und 75% liegt.

4. Verwendung des Dispergiermittels nach Ansprüchen 1-3 zum Dispergieren von festen Substanzen.

## Revendications

1. Agent dispersant ou un sel de celui-ci, comprenant au moins un dendrimère, ledit dendrimère comprenant un coeur, un certain nombre de générations de ramifications et une surface externe composée de groupes fonctionnels choisis dans le groupe formé par les groupes hydroxyle, -NCO, carboxyle et amine ; dans lequel
a) entre 5% et 75% du nombre total de groupes réactifs fonctionnels ont réagi avec un groupe R-X, où
R est une chaîne de liaison allongeur de chaîne ayant au moins 2 atomes dans la chaîne et est à base d'acides dicarboxyliques, de diols, de diamines, d'acides hydroxycarboxyliques, d'hydroxyamines ou d'acides aminocarboxyliques, et où
X est un groupe qui interagit avec le pigment solide à disperser et qui est choisi parmi des fractions azotées, des fractions carboxyle, des fractions ester d'acide phosphorique et des fractions ester d'acide sulfonique, à condition que le groupe fonctionnel réactif et le groupe X soient différents ; et dans lequel
b) une partie des groupes fonctionnels a réagi avec des groupes améliorant la compatibilité choisis parmi des matières grasses et des dérivés de celles-ci, des matières aromatiques, des fractions alkyle éventuellement substituées, des fractions contenant un groupe ester, des fractions contenant un groupe amide et des fractions contenant un groupe éther.

2. Agent dispersant selon la revendication 1, dans lequel R est lié au dendrimère et aux groupes X par l'intermédiaire de groupes ester, éther, amide, urée ou uréthanne.

3. Agent dispersant selon les revendications 1 et 2, dans lequel le nombre de groupes fonctionnels qui a réagi avec un groupe R-X est compris entre 25% et 75% et de manière plus particulièrement préférée entre 50% et 75%.

4. Utilisation de l'agent dispersant selon les revendications 1 à 3 pour disperser des substances solides.
